(19) Europäisches Patentamt / European Patent Office / Office européen des brevets

(11) **EP 2 739 945 B1**

(12) **EUROPÄISCHE PATENTSCHRIFT**

(45) Veröffentlichungstag und Bekanntmachung des Hinweises auf die Patenterteilung:
**12.09.2018   Patentblatt 2018/37**

(21) Anmeldenummer: **12740161.0**

(22) Anmeldetag: **26.07.2012**

(51) Int Cl.:
**G01F 23/284** (2006.01)    **G01F 23/296** (2006.01)

(86) Internationale Anmeldenummer:
**PCT/EP2012/064740**

(87) Internationale Veröffentlichungsnummer:
**WO 2013/017533 (07.02.2013 Gazette 2013/06)**

(54) **TRACKING UNTER BERÜCKSICHTIGUNG EINES LINEAREN VERHÄLTNISSES**

FILL LEVEL MEASURING DEVICE AND METHOD FOR DETERMINING A FUNCTIONAL CORRELATION BETWEEN DIFFERENT TRACKS

APPAREIL DE MESURE DU NIVEAU DE REMPLISSAGE ET PROCÉDÉ DE DÉTERMINATION D'UN RAPPORT FONCTIONNEL ENTRE DIFFÉRENTES PISTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2011   EP 11176609**
**04.08.2011   US 201161515184 P**
**17.10.2011   EP 11185454**
**17.10.2011   US 201161547863 P**

(43) Veröffentlichungstag der Anmeldung:
**11.06.2014   Patentblatt 2014/24**

(73) Patentinhaber: **VEGA Grieshaber KG**
**77709 Wolfach (DE)**

(72) Erfinder:
• WELLE, Roland
  77709 Oberwolfach (DE)
• HOFERER, Christian
  77654 Offenburg (DE)

(74) Vertreter: **Maiwald Patent- und Rechtsanwaltsgesellschaft mbH**
**Elisenhof**
**Elisenstraße 3**
**80335 München (DE)**

(56) Entgegenhaltungen:
EP-A1- 2 148 219       EP-A1- 2 309 235
US-A1- 2006 137 446

**Beschreibung**

Gebiet der Erfindung

Die Erfindung betrifft das technische Gebiet der Füllstandmessung. Insbesondere betrifft die Erfindung ein Laufzeit-Füllstandmessgerät, ein Verfahren zum Durchführen eines Tracking-Verfahrens durch ein Füllstandmessgerät, einen Prozessor, ein computerlesbares Medium und ein Programmelement.

Technischer Hintergrund

Laufzeit-Füllstandmessgeräte arbeiten nach dem FMCW oder Impuls-Laufzeitverfahren. Diese Messgeräte senden elektromagnetische oder akustische Wellen in Richtung einer Füllgutoberfläche aus. Diese Wellen werden dann ganz oder teilweise von verschiedenen Reflektoren reflektiert. Bei diesen Reflektoren kann es sich insbesondere um die Oberfläche des Füllmediums (z.B. Wasser, Öl, andere Fluide oder Fluidmischungen oder Schüttgut), den Boden des Behälters, in dem das Füllmedium gespeichert ist, Verunreinigungen, Trennschichten zwischen verschiedenen Füllgütern (beispielsweise die Trennschicht zwischen Wasser und Öl) oder stationäre Störstellen im Behälter, wie Vorsprünge oder andere Behältereinbauten, handeln.

Das so reflektierte Sendesignal (im Folgenden auch Empfangssignal oder Echokurve genannt) wird nun anschließend von dem Füllstandmessgerät aufgenommen und aufgezeichnet.

Die Füllstandmessgeräte arbeiten typischerweise in einem gepulsten Betrieb, senden also jeweils zu verschiedenen Zeiten ein Sendesignal in Impulsform aus und der resultierende, reflektierte Impuls des Sendesignals (Empfangssignal) wird dann, wie bereits beschrieben, von der Sensorik des Füllstandmessgeräts detektiert. Daraus leitet dann die Auswerteeinheit des Geräts die Lage oder Position der Füllmediumoberfläche ab. In anderen Worten wird also aus diesem aufgenommenen Impuls der Füllstand bestimmt.

Andere Füllstandmessgeräte arbeiten nach dem FMCW-Prinzip. Dabei werden kontinuierlich in der Frequenz modulierte Wellen in Richtung des Behälters abgestrahlt, und die reflektierten Signalanteile werden im Gerät zusammen mit dem momentan abgestrahlten Signal verarbeitet. Ergebnis dieser Verarbeitung ist ein Frequenzspektrum, das sich nach bekannten Verfahren in eine Echokurve überführen lässt.

Die so gewonnenen und ggf. bereits verarbeiteten und ausgewerteten Daten können an ein externes Gerät bereitgestellt werden. Die Bereitstellung kann in analoger Form (4...20mA-Schnittstelle) oder auch in digitaler Form (Feldbus) erfolgen.

Auch kann die Datenübertragung drahtlos erfolgen.

Die aufgenommene Echokurve, bei der es sich um den an einer oder mehreren Reflektoren reflektierten Sendeimpuls handelt, weist typischerweise ein oder mehrere Maxima und/oder Minima auf, deren elektrische Distanzen zur Empfangseinheit aus der Lage der entsprechenden Maxima oder Minima bestimmt werden können.

Diese elektrischen Distanzen korrespondieren mit den Laufzeiten der entsprechenden Signalanteile des Impulses. Unter Berücksichtigung der Ausbreitungsgeschwindigkeit des Signals können hieraus die physikalischen, also die tatsächlichen Distanzen, ermittelt werden.

Die elektrische Distanz entspricht der halben Distanz, die eine elektromagnetische Welle im Vakuum in einer bestimmten Zeit zurücklegt. Die elektrische Distanz eines Echos korrespondiert über die Lichtgeschwindigkeit direkt mit der Laufzeit eines Signals zur Reflexionsstelle und zurück zum Füllstandmessgerät. Die elektrische Distanz berücksichtigt keinerlei Einflüsse eines Mediums, welche möglicherweise zu einer langsameren Ausbreitung der elektromagnetischen Wellen führen. Der Begriff der elektrischen Distanzen ist dem Fachmann bekannt.

Wichtig für die exakte Bestimmung der Position des Füllstands und der Positionen anderer Reflektoren ist, dass die Maxima und/oder Minima in der Echokurve (im Folgenden Echos genannt) eindeutig identifiziert und einem bestimmten Reflektor zugeordnet werden können.

Diese Zuordnung ist oft schwierig, da es sein kann, dass zwei benachbarte Echos überlappen und so nicht unterschieden werden können, oder da die Amplitude eines Echos zu gering ist, als dass das Echo klar als solches erkannt werden könnte.

US 2006/0137446 A1 und EP 2 309 235 A1 beschreiben jeweils ein Füllstandmessgerät, welches einen ersten Track einer ersten Gruppe von Echos und einen zweiten Track einer zweiten Gruppe von Echos bestimmen kann.

EP 2 148 219 A1 beschreibt die Prozessierung von Puls-Echo-Messsignalen. Auch hier werden mehrere Tracks bestimmt.

Zusammenfassung der Erfindung

Es ist eine Aufgabe der Erfindung, die Bestimmung von Füllständen zu verbessern.

Gemäß einem ersten Aspekt der Erfindung ist ein Laufzeit-Füllstandmessgerät angegeben, welches eine Sendeeinheit zum Aussenden eines Sendesignals, das an einer Füllgutoberfläche eines Füllmediums und zumindest an einem zweiten Reflektor reflektiert wird, aufweist. Das Laufzeit-Füllstandmessgerät sendet also das Sendesignal in Richtung der Füllgutoberfläche aus.

Darüber hinaus ist eine Empfangseinheit vorgesehen (welche sich bestimmte Bauteilgruppen mit der Sendeeinheit teilen kann; im Falle eines Füllstandradars wäre die gemeinsame Bauteilgruppe beispielsweise die Sende-/Empfangsantenne), die dem Erfassen des reflektierten Sendesignals (auch Empfangssignal, Empfangspuls oder auch Echokurve genannt) dient. Bei diesem reflektierten Sendesignal handelt es sich also um eine Echokurve, die im Falle mehrerer Reflektoren mehrere Echos aufweist. Allerdings können diese Echos in der Echokurve nicht immer klar erkannt werden, da deren Amplitude in manchen Fällen zu gering ist oder da sie teilweise miteinander überlappen.

Weiterhin weist das Laufzeit-Füllstandmessgerät eine Auswerteeinheit zum Durchführen eines Tracking-Verfahrens zur Gruppierung von jeweils auf identische Reflektoren zurückzuführende Echos von zu verschiedenen Zeiten erfassten Echokurven auf.

Das Tracking-Verfahren wird im Folgenden noch einmal unter Bezugnahme auf die Figuren erklärt. Letztendlich nimmt das Laufzeit-Füllstandmessgerät Echokurven zu verschiedenen Zeiten auf, so dass sich eine zeitliche Abfolge von Echokurven ergibt, welche die zeitliche Entwicklung der Verhältnisse im Behälter widerspiegeln. Die Auswerteeinheit kann nun jede einzelne Echokurve analysieren und die Lage der Maxima bzw. Minima feststellen.

Aufgabe des Tracking-Verfahrens ist es nun, jedes Maximum bzw. Minimum einem Reflektor im Behälter zuzuordnen oder als nicht zuordenbares Echo zu klassifizieren.

Erfolgt diese Zuordnung auf korrekte Weise, erhält man daraus die zeitliche Entwicklung des Füllstands und die zeitliche Entwicklung der Positionen oder elektrischen Distanzen der verschiedenen anderen Reflektoren im Tank. Die zeitliche Entwicklung der Positionen oder Echoorte kann dann in einem Diagramm aufgezeichnet werden.

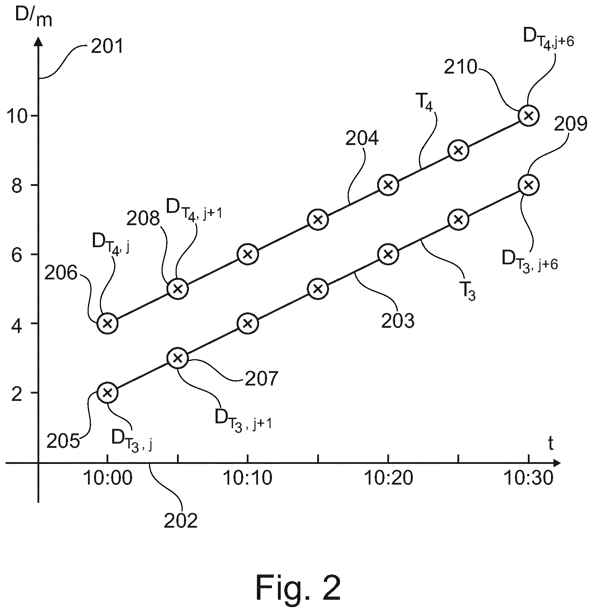

Geht man nun von einer konstanten Entnahme- oder Befüllungsrate im Behälter aus, kann man die einzelnen Messpunkte (also die aus den aufeinanderfolgenden Echokurven berechneten elektrischen Distanzen bzw. Positionen der Reflektoren; hierunter fällt auch die Position der Füllgutoberfläche) näherungsweise durch ein Geradensegment abbilden, wie dies beispielsweise in Fig. 2 gezeigt ist.

Ändert sich nun die Befüllungsrate oder die Entnahmerate des Füllguts, führt dies bei der Beschreibung von Tracks mit Hilfe von Geradensegmenten zu einem Knick in der berechneten Kurve. In diesem Falle handelt es sich also um zwei aneinandergesetzte Geradensegmente mit unterschiedlicher Steigung. Die Beschreibung von Tracks mit Hilfe von Geradensegmenten oder Tracksegmenten ist dem Fachmann bekannt. Ausführungsformen hierzu finden sich beispielsweise in den Offenbarungen der Schrift US 20110231118 A1.

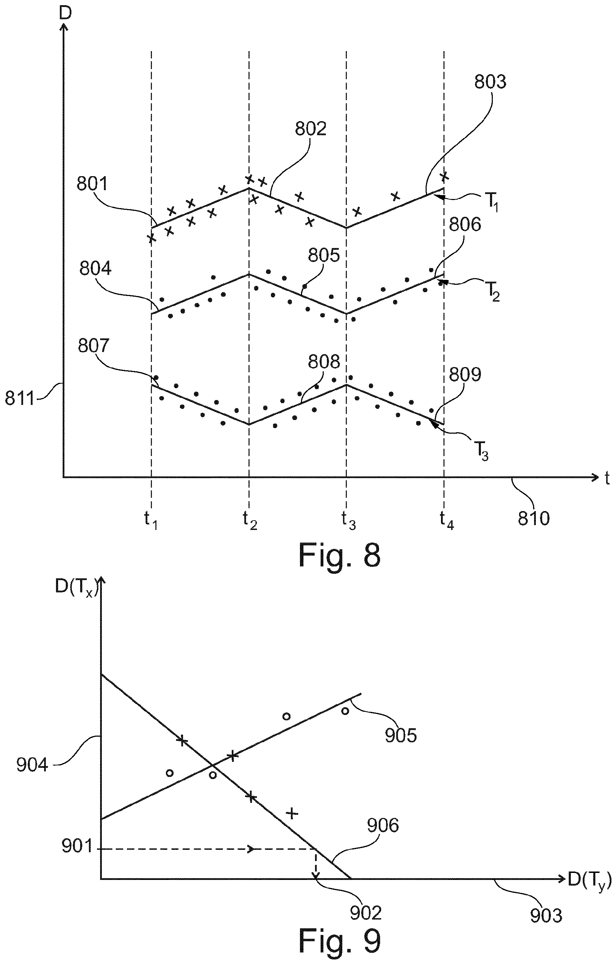

Da hierfür die elektrischen Distanzen und nicht die tatsächlichen, physikalischen Distanzen berücksichtigt werden, ändert sich mit steigendem oder sinkendem Füllstand auch die Position des Bodenechos oder anderer stationärer Reflektoren, die sich unterhalb der Füllgutoberfläche befinden. Dies ist schematisch in Fig. 8 gezeigt.

Bei diesen aneinandergesetzten Geradensegmenten spricht man dann von Tracks. Geradensegmente sind ein Beispiel einer besonders speichereffizienten Darstellung von Tracks. Fig. 8 zeigt drei solche Tracks $T_1$, $T_2$, $T_3$.

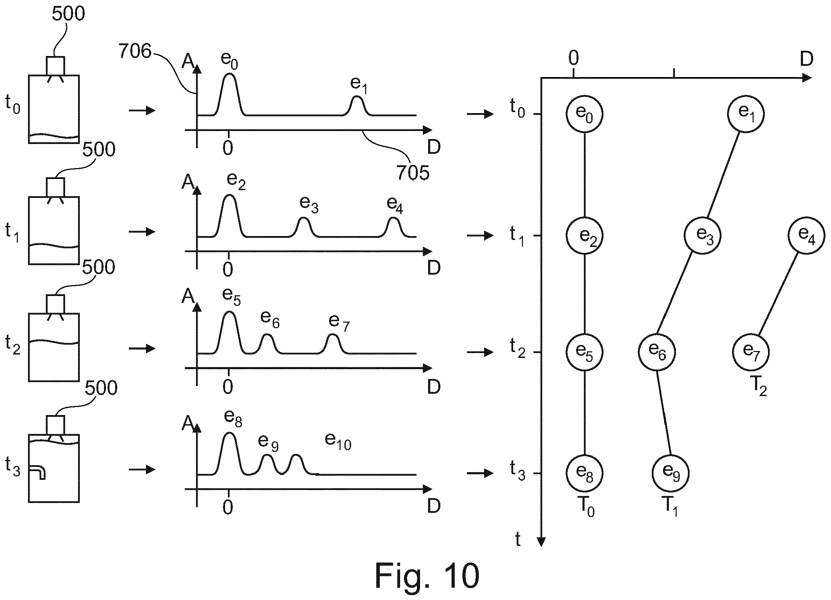

Darüber hinaus mag es aber auch möglich sein, die einzelnen Positionen der in einem Track gruppierten Echos direkt im Speicher abzulegen. Figur 10 zeigt diese Realisierungsvariante. Weiterhin mögen andere Repräsentationen eines Tracks verwendet werden, beispielsweise mathematische Beschreibungsformen wie Polynomdarstellungen oder andere mathematische Beschreibungsformen.

Einer dieser Tracks beschreibt im Regelfall die Position der Füllgutoberfläche zu verschiedenen Zeiten, ein anderer Track der Position des Bodenechos und ein dritter Track beispielsweise die Position eines stationären Reflektors unterhalb der Füllgutoberfläche, die Position einer Trennschicht zwischen zwei verschiedenen Füllmedien oder dem Sondenende im Falle einer Füllstandmessung mit geführten Wellen.

Die Auswerteeinheit des Laufzeit-Füllstandmessgeräts ist somit ausgeführt zum Bestimmen eines ersten Tracks einer ersten Gruppe von Echos, die auf einen ersten Reflektor (beispielsweise Füllgutoberfläche, Behälterboden, etc.) zurückzuführen sind, und eines zweiten Tracks einer zweiten Gruppe von Echos, die auf einen zweiten Reflektor (in diesem Fall beispielsweise Behälterboden, Füllgutoberfläche, etc.) zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten (also zu den verschiedenen Zeitpunkten, an denen die verschiedenen Sendesignale ausgesandt wurden) beschreibt.

Weiter ist die Auswerteeinheit ausgeführt zum Bestimmen eines linearen Verhältnisses oder linearen Zusammenhangs oder eines funktionalen Zusammenhangs zwischen dem ersten Track und dem zweiten Track oder genauer zwischen den Positionen der Echos, welche dem ersten Track zugeordnet werden und den Positionen der Echos, welche dem zweiten Track zugeordnet werden.

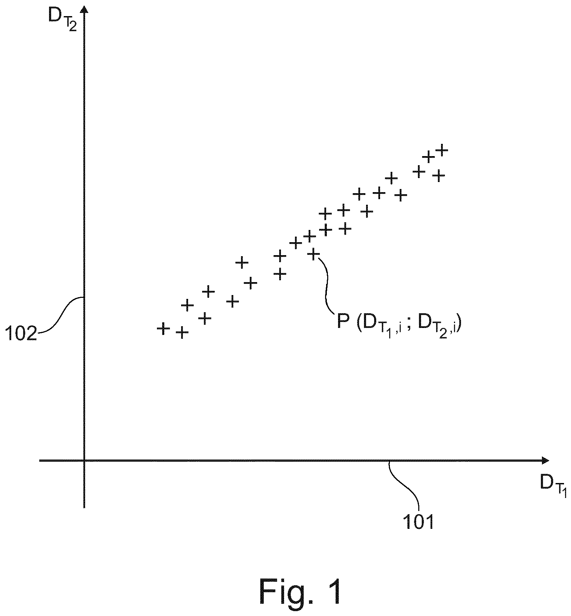

Wie dieser funktionale Zusammenhang berechnet wird, ist insbesondere anhand der Figuren 1 bis 4 weiter unten erklärt.

Da sich nun die elektrischen Positionen oder elektrischen Distanzen der ortsfesten Reflektoren unterhalb der Füllgutoberfläche auf entsprechende Weise verändern wie die Position der Füllgutoberfläche selbst, besteht zwischen jeweils zwei Tracks ein aus mathematischer Sicht linearer Zusammenhang bzw. ein lineares Verhältnis bezüglich der elektrischen Distanzen oder Orte der in den jeweiligen Tracks gruppierten Echos, welches mit Hilfe der verschiedenen Echokurven abgeschätzt werden kann.

Nach der Bestimmung des linearen Verhältnisses zwischen dem ersten Track und dem zweiten Track kann dann die Auswerteeinheit ein erstes Echo einer weiteren Echokurve dem ersten Track zuordnen. Diese weitere Echokurve ist beispielsweise zu einem späteren Zeitpunkt als die zur Bestimmung des linearen Verhältnisses zwischen den beiden Tracks hinzugezogenen zeitlich aufeinander folgenden Echokurven aufgenommen. Es handelt sich hier also um eine neue Messung.

Die Auswerteeinheit kann dann eine erwartete Position eines zweiten Echos der weiteren Echokurve bestimmen, indem sie diese erwartete Position unter Berücksichtigung der Position des ersten Echos des ersten Tracks und des linearen Verhältnisses berechnet.

Aus Kenntnis des linearen Zusammenhangs zwischen den beiden Tracks und eines weiteren Messpunktes (die Position eines Echos einer weiteren Echokurve) kann dann also die erwartete Position des entsprechenden anderen Echos berechnet bzw. abgeschätzt werden.

Ist dies geschehen, kann dann die Auswerteeinheit anhand der neu aufgezeichneten Echokurve feststellen, ob die so bestimmte erwartete Position des zweiten Echos auch einer tatsächlichen Position eines Echos der weiteren Echokurve entspricht. Im vorliegenden Kontext mag eine bestimmte erwartete Position des zweiten Echos auch dann einer tatsächlichen Position eines Echos der weiteren Echokurve entsprechen, wenn die tatsächliche Position eines Echos der weiteren Echokurve innerhalb einem vorgebbaren Abstand oder innerhalb einer vorgebbaren Umgebung um die bestimmte erwartete Position liegt. In anderen Worten wird die Echokurve untersucht und es wird festgestellt, ob sich an der erwarteten Position oder in einer vorgebbaren Umgebung von der erwarteten Position tatsächlich auch ein Echo befindet. Ist dies der Fall, wird das zweite Echo tatsächlich dem zweiten Track zugeordnet.

Es handelt sich also um eine Art Plausibilitätskontrolle. Zum einen überprüft die Auswerteeinheit, ob sie aus der Echokurve ein Echo ablesen kann und zum anderen berechnet sie, ob die Position dieses Echos auch der mathematisch zu erwartenden Position entspricht.

Es werden also vorab gewonnene Erkenntnisse einzelner Echos früher aufgezeichneter Echokurven (Füllstandecho, Mehrfachecho, Bodenecho, etc.) berücksichtigt, um die weitere Verfolgung dieser Echos mittels Tracking zu verbessern.

Auf diese Weise kann ein sicheres Verfolgen von Füllstandechos beim Befüllen und dem Leeren von Behältern erfolgen, unabhängig vom Vorhandensein von störenden Vielfachechos, Störechos und Bodenechos.

Die Erfindung bietet die Möglichkeit, unabhängig von Amplitudenverhältnissen oder Befüllgeschwindigkeiten das Füllstandecho auch bei Anwesenheit von Störechos, Bodenechos oder Mehrfachechos sicher zu verfolgen.

Da die Auswerteeinheit das Verhältnis zwischen zwei beliebigen Tracks oder das Verhältnis zwischen den elektrischen Distanzen oder Orten zweier beliebiger Tracks bestimmen kann, lässt sich dieses Verfahren nicht nur für das Füllstandecho, sondern auch für die anderen Echos der Echokurve einsetzen. Insbesondere gestattet es das Verfahren, dass sämtliche in der Echokurve erfassten Echos getrackt werden (dass also prinzipiell jedes Echo, insofern zuordenbar, auch einem eigenen Track zugeordnet wird). Hieraus kann sich eine Vielzahl einzelner Tracks ergeben, zu denen jeweils paarweise ein lineares Verhältnis ermittelt werden kann. Auf diese Weise kann bei einer neu aufgezeichneten Echokurve für jedes dieser Paare bestimmt werden, ob die bestimmte, erwartete Position des Echos des jeweils zweiten Tracks des entsprechenden Trackpaares einer tatsächlichen Position eines Echos der neuen Echokurve entspricht.

Dies führt dann letztendlich dazu, dass die Auswerteeinheit am Ende dieser Berechnungen entscheiden kann, welche Zuordnung der einzelnen Echos der neuen Echokurve aller Wahrscheinlichkeit nach die richtige ist.

Natürlich kann es sein, dass dieses Verfahren zu dem Ergebnis kommt, dass sämtliche möglichen Zuordnungen oder zumindest einige der möglichen Zuordnungen mit der gleichen Wahrscheinlichkeit korrekt sind. In diesem Fall können weitere Überlegungen zum Einsatz kommen, um die Wahrscheinlichkeit für eine korrekte Zuordnung der einzelnen Echos zu den einzelnen Tracks zu erhöhen. Hierbei handelt es sich beispielsweise um bereits bekannte Tracking-Verfahren.

Im Übrigen können natürlich die weiteren Überlegungen in jedem Falle zusätzlich angewandt werden.

Gemäß einer Ausführungsform der Erfindung ist die Auswerteeinheit weiterhin zum Durchführen der Schritte (b) (Bestimmen des linearen Verhältnisses zwischen dem ersten Track und dem zweiten Track), (c) (Zuordnen eines ersten Echos einer weiteren Echokurve dem ersten Track), (d) (Bestimmen einer erwarteten Position eines zweiten Echos durch Berechnung) und (e) (Feststellen, ob die so bestimmte erwartete Position auch einer tatsächlichen Position des Echos einer weiteren Echokurve entspricht und Zuordnen des zweiten Echos dem zweiten Track, falls dies der Fall ist) mit dem ersten Track, das erste Echo und einem dritten Track ausgeführt.

Das Verfahren wird nun also noch einmal mit einer anderen Track-Paarung durchgeführt.

Gemäß einer weiteren Ausführungsform der Erfindung ist die Auswerteeinheit weiterhin zum Durchführen der Schritte (b) bis (e) für einen dritten Track, ein drittes Echo der weiteren Echokurve, das dem dritten Track zugeordnet wird, und dem zweiten Track ausgeführt.

In anderen Worten kann die Auswerteeinheit also, wie bereits oben beschrieben, das Verfahren für sämtliche Paarungen der verschiedenen Tracks durchführen.

Das Bestimmen des linearen Verhältnisses zwischen dem ersten Track und dem zweiten Track mag insbesondere das Bestimmen des linearen Zusammenhangs zwischen den elektrischen Distanzen der dem ersten Track zugeordneten Echos und den elektrischen Distanzen der dem zweiten Track zugeordneten Echos sein. Das Bestimmen einer erwarteten Position eines zweiten Echos durch Berechnung mag insbesondere die Berechnung der erwarteten elektrischen Distanz eines zweiten Echos sein.

Gemäß einer weiteren Ausführungsform der Erfindung ist die Auswerteeinheit ausgeführt, die bestimmte erwartete Position des Echos der weiteren Echokurve als Treffer zu werten, falls in Schritt (e) festgestellt wird, dass die bestimmte erwartete Position des Echos auch einer tatsächlichen Position eines Echos der weiteren Echokurve entspricht.

Wird nun dieses Verfahren für sämtliche Track-Paare durchgeführt, können dann die unterschiedlichen Trefferzahlen miteinander verglichen werden. Gemäß einer weiteren Ausführungsform der Erfindung vergleicht die Auswerteeinheit die Anzahl an Treffer nach mehrfacher Durchführung der Schritte (b) bis (e), wobei das erste Echo stets dem ersten Track zugeordnet wird, bis alle weiteren Tracks der Echokurve berücksichtigt wurden, mit der Anzahl an Treffer nach mehrfacher Durchführung der Schritte (b) bis (e), wobei das erste Echo stets einem anderen Track als dem ersten Track zugeordnet wird, bis alle weiteren Tracks der Echokurve berücksichtigt wurden.

Gemäß einem weiteren Aspekt der Erfindung ist die Auswerteeinheit ausgeführt zum Vergleichen der Anzahl an Treffern zur Bewertung der Wahrscheinlichkeit einer korrekten Zuordnung der Echos zu den entsprechenden Tracks.

Gemäß einem weiteren Aspekt der Erfindung ist ein Verfahren zum Durchführen eines Tracking-Verfahrens zur Gruppierung von auf identische Reflexionsstellen zurückzuführende Echos zeitlich aufeinanderfolgender Echokurven und zum Zuordnen eines Echos zu einem Track angegeben. Das Verfahren weist die folgenden Schritte auf:

(a) Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt;

(b) Bestimmen eines linearen Verhältnisses zwischen dem ersten Track und dem zweiten Track;

(c) Zuordnen eines ersten Echos einer weiteren Echokurve dem ersten Track, wobei die weitere Echokurve zu einem späteren Zeitpunkt als die zeitlich aufeinanderfolgenden Echokurven aufgenommen wurde;

(d) Bestimmen einer erwarteten Position eines zweiten Echos der weiteren Echokurve durch Berechnung der erwarteten Position unter Berücksichtigung der Position des ersten Echos des ersten Tracks und des linearen Verhältnisses;

(e) Feststellen, ob die so bestimmte erwartete Position des zweiten Echos auch einer tatsächlichen Position eines Echos der weiteren Echokurve entspricht, und Zuordnen des zweiten Echos dem zweiten Track, falls dies der Fall ist.

Gemäß einem weiteren Aspekt der Erfindung ist ein Prozessor zum Durchführen eines oben und im Folgenden beschriebenen Tracking-Verfahrens zur Gruppierung von auf identische Reflexionsstellen zurückzuführende Echos zeitlich aufeinanderfolgender Echokurven und zum Zuordnen eines Echos zu einem Track angegeben.

Gemäß einem weiteren Aspekt der Erfindung ist ein computerlesbares Medium angegeben, auf dem ein Programm gespeichert ist, das, wenn es auf einem Prozessor eines Laufzeit-Füllstandmessgeräts ausgeführt wird, den Prozessor anleitet, die oben und im Folgenden beschriebenen Verfahrensschritte durchzuführen.

Gemäß einem weiteren Aspekt der Erfindung ist ein Programmelement angegeben, das, wenn es auf einem Prozessor eines Laufzeit-Füllstandmessgeräts ausgeführt wird, den Prozessor anleitet, die oben und im Folgenden beschriebenen Schritte durchzuführen.

Im Folgenden werden mit Verweis auf die Figuren Ausführungsbeispiele der Erfindung beschrieben.

Kurze Beschreibung der Figuren

Fig. 1 zeigt eine diagrammatische Darstellung des Zusammenhangs von Trackpositionen (elektrischen Distanzen von Reflektoren), die aus zeitlich aufeinanderfolgenden Echokurven gewonnen wurden, gemäß einem Ausführungsbeispiel der Erfindung.

Fig. 2 zeigt die zeitlichen Verläufe zweier Tracks.

Fig. 3 zeigt eine diagrammatische Darstellung des linearen Verhältnisses von Trackpositionen zweier Tracks gemäß einem Ausführungsbeispiel der Erfindung.

Fig. 4 zeigt ein Verfahren zur Reduktion der Kombinatorik bei der Füllstandbestimmung gemäß einem Ausführungsbeispiel der Erfindung.

Fig. 5 zeigt ein Füllstandmessgerät mit einem Füllgutbehälter gemäß einem Ausführungsbeispiel der Erfindung.

Fig. 6 zeigt ein anderes Füllstandmessgerät mit einem Füllgutbehälter gemäß einem Ausführungsbeispiel der Erfindung.

Fig. 7A zeigt eine zu einer ersten Zeit aufgenommene Echokurve.

Fig. 7B zeigt eine zu einem zweiten Zeitpunkt aufgenommene Echokurve.

Fig. 8 zeigt die zeitliche Entwicklung mehrerer Tracks.

Fig. 9 zeigt die linearen Verhältnisse zwischen jeweils zwei Tracks.

Fig. 10 veranschaulicht ein Tracking-Verfahren.

Fig. 11 veranschaulicht ein weiteres Tracking-Verfahren.

Fig. 12 zeigt ein weiteres Beispiel für einen funktionalen Zusammenhang (lineares Verhältnis) zwischen zwei Tracks.

Fig. 13 zeigt mehrere Alternativzuordnungen zwischen bestehenden Tracks und aufgefundenen Echos.

Fig. 14 zeigt die Ermittlung einer erwarteten Position eines Echos.

Fig. 15 zeigt die Ermittlung einer erwarteten Position eines anderen Echos.

Fig. 16 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich. Werden in verschiedenen Figuren die gleichen Bezugszeichen verwendet, so können diese gleiche oder ähnliche Elemente bezeichnen. Gleiche oder ähnliche Elemente können aber auch durch verschiedene Bezugszeichen bezeichnet sein.

Im Folgenden sei eine mögliche Ausführung der Auswerteeinheit eines Füllstandmessgerätes dargestellt. Die aufgenommene Echokurve kann zunächst einer Aufbereitung unterzogen werden. Durch eine gezielte digitale Aufwertung des Signals z.B. durch eine digitale Filterung ist es einem Verfahren zur Echoextraktion leichter möglich, die signifikanten Signalanteile oder Minima oder Maxima aus der Echokurve zu bestimmen.

Die extrahierten Echos können zur weiteren Verarbeitung beispielsweise in Form einer Liste gespeichert werden. Es sind jedoch auch weitere Möglichkeiten für den Zugriff auf die Daten möglich als die Speicherung in einer Liste. Der Funktionsblock Tracking ordnet die Echos einer Echokurve zum Zeitpunkt $t_i$ den Echos der darauffolgenden Echokurve zum Zeitpunkt $t_{i+1}$ zu, wobei die einem Track zugeordneten Echos dieselbe physikalische Reflexionsstelle und dieselbe Wegstrecke durchlaufen haben (also durch Reflexion des Sendesignals am selben Reflektor erzeugt wurden).

Trackingverfahren sind bekannt. Nähere Informationen finden sich beispielsweise in WO 2009/037000 A2.

Ein Kernaspekt der Erfindung ist es, die zeitliche Entwicklung zweier Tracks, das heißt die zeitliche Entwicklung der Positionen zweier verschiedener physikalischer Reflexionsstellen bzw. zweier Reflexionen, untereinander in Relation zu setzen und daraus die Parameter eines linearen Zusammenhangs zu ermitteln. Jeder Track mag aus einer Folge von Positionswerten bestehen, die aus den Echos mehrerer in zeitlichem Abstand erfassten Echokurven ermittelt wurden. Da bei Füllstandmessgeräten der Abstand vom Sensor zum Füllgut gemessen werden soll, wird neben dem Begriff Position auch der Begriff Distanz verwendet.

Fig. 1 soll den Sachverhalt der Relation zwischen zwei Tracks näher erläutern. Das Achsenkreuz zeigt eine Punktwolke, die aus den Distanzpaaren der einzelnen Positionswerte zweier Tracks gebildet wird. Beispielsweise sind die Tracks als Track $T_1$ und Track $T_2$ bezeichnet. Es kann jedoch jede andere denkbare Kombination aus zwei verschiedenen Tracks herangezogen werden.

Jedes Distanzpaar ist durch ein Kreuz markiert. Die Abszissenachse (x-Achse 101) umfasst die Distanz D des Tracks $T_1$, die Ordinatenachse (y-Achse 102) umfasst die Distanz D des Tracks $T_2$. Diese Anordnung ist nicht zwingend erforderlich. So könnte auch Abszissenachse und Ordinatenachse gegeneinander getauscht werden. Auch die Maßeinheit der Achsenskalierung ist für die Erfindung irrelevant. So steht hier die elektrische Distanz D nur beispielhaft. Auch eine zeitliche Skalierung der Position gemäß der Echokurve wäre möglich. Ein Distanzpaar ist in Figur 1 zur genaueren Erläuterung gesondert markiert. Das Distanzpaar $P(D_{T_1,i}; D_{T_2,i})$ beschreibt ein Wertepaar zweier Positionen von Track $T_1$ und Track $T_2$ zum Zeitpunkt i, an dem die Echokurve erzeugt wurde. Die anderen und nicht genauer bezeichneten Punkte im Diagramm stammen aus weiteren Echokurven, die zu anderen Zeitpunkten vom Sensor erfasst wurden. Eine neue vom Sensor erzeugte Echokurve, die aus einem weiteren Signalverarbeitungsdurchlauf stammt und deren Echos den Tracks zugeordnet wurden, würde das Diagramm um einen zusätzlichen Punkt erweitern.

Der in Fig. 1 dargestellte Zusammenhang der Positionen der beiden Tracks macht deutlich, dass sich die Positionen von Track $T_1$ und Track $T_2$ in Relation bringen lassen können. Das bedeutet, dass Track $T_1$ und Track $T_2$ in einem funktionalen Zusammenhang stehen. Eine Geradengleichung, die die Punktwolke beschreibt, dient dafür als Grundlage. Mathematisch lässt sich dieser Zusammenhang wie folgt beschreiben:

$$D_{T2,k} = a_1 \cdot D_{T1,k} + a_0 + e_k$$

$$(1.1)$$

$D_{T2,k}$ ist die Position des Tracks $T_2$ der Messung zum Zeitpunkt $k$

$D_{T1,k}$ ist die Position des Tracks $T_1$ der Messung zum Zeitpunkt $k$

$a_0$ und $a_1$ sind die Parameter einer Geraden, die den linearen Zusammenhang zwischen der Position von Track $T_1$ und Track $T_2$ beschreiben.

$e_k$ ist der Fehler des Zusammenhangs für die Messung zum Zeitpunkt k.

Der Parameter $a_1$ der Funktion ist ohne Maßeinheit, wohingegen $a_0$ dieselbe Maßeinheit wie $D_{T2,k}$ bzw. $D_{T1,k}$ aufweist. $e_k$ trägt dieselbe Maßeinheit wie $D_{T2,k}$ bzw. $D_{T1,k}$. Die Postulierung eines Fehlers im gegebenen Zusammenhang ist notwendig, da so die Fehler des Modells zusammengefasst abgebildet werden. Die Parameter $a_1$ und $a_0$ sind abhängig von den gegebenen Eigenschaften der Messstelle, an welcher der Sensor zum Einsatz kommt. Zudem sind die Parameter abhängig vom Verlauf der Tracks, die miteinander in Relation gebracht werden.

Formel (1.1) ist nur eine Ausprägung des Zusammenhangs. Natürlich lässt sie sich auf jeden Track und insbesondere auf jede Paarung von Tracks anwenden und bedarf nicht unbedingt Track $T_1$ und Track $T_2$ als Grundlage. Die Werte der Parameter $a_1$ und $a_0$ sind dann jedoch von dem Zusammenhang zwischen Track $T_1$ und Track $T_2$ verschieden.

Fig. 2 zeigt den beispielhaften Verlauf zweier Tracks ($T_3$ 203 und $T_4$ 204) über die Zeit. Die y-Achse 201 bezeichnet die Distanz in Metern und die x-Achse 202 bezeichnet die den Zeitpunkt t, zu welchem das Füllstandmessgerät die Positionen der jeweiligen Tracks erfasst hat. Die Stützstellen 205, 207, 209,... und 206, 208, 210,... der Tracks 203, 204, die sich aus den Echopositionen der Echokurven zum jeweiligen Zeitpunkt $j$ ergeben, sind jeweils durch ein x markiert.

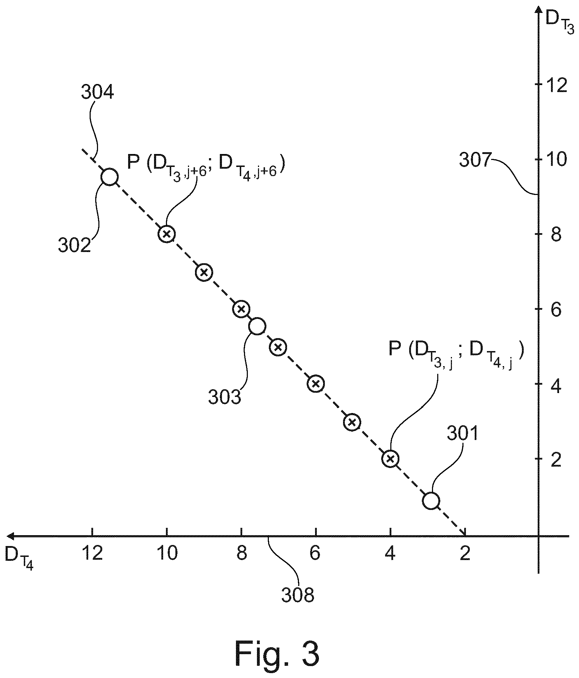

Überträgt man die Stützstellen aus Fig. 2 in ein Diagramm, das wie Fig. 1 die Relation zwischen beiden Tracks verdeutlicht, so erhält man das Diagramm in Fig. 3. Die y-Achse 307 umfasst hier die Positionen von Track $T_3$, die x-Achse 308 umfasst hier die Positionen von Track $T_4$. Zudem ist der lineare Zusammenhang 304 zwischen den beiden Tracks in Form einer unterbrochenen Linie eingezeichnet. Es ist nun zu erkennen, dass neben den Stützstellen in Fig. 3 auch weitere Aussagen über den Zusammenhang beider Tracks getroffen werden können. Sowohl für Positionen 303, die sich zwischen den Stützstellen befinden als auch für Positionen 302 und 301, die sich neben den Stützstellen befinden, kann der Zusammenhang angewandt werden. Ferner bedeutet dies, dass, wenn die Position des einen Tracks bekannt ist, die Position des anderen Tracks vorhergesagt werden kann. Diese Vorhersage ist umkehrbar. Im Beispiel aus Fig. 3 bedeutet dies, dass die Position von Track $T_4$ aus der Position von Track $T_3$ vorhergesagt werden kann und umgekehrt. Zudem kann nicht nur eine Vorhersage getroffen werden, sondern auch eine Schätzung der Position eines Tracks angegeben werden, wenn eine Bestimmung der Position des Tracks aufgrund von ungünstigen Signalverhältnissen nicht möglich wäre.

Bestimmung der Parameter $a_0$ und $a_1$:

Die Parameter $a_0$ und $a_1$ können beispielsweise von einem im Füllstandmessgerät integrierten Funktionsblock Relations-Regressions-Analyse selbständig bestimmt werden. Aufgrund nicht vermeidbarer Fehler bei der messtechnischen Erfassung der Positionen einzelner Echos oder Tracks ist eine sogenannte Schätzung der Parameter vorteilhaft, die den Fehler bei der Bestimmung der Parameter minimiert. Die Schätzung an sich kann auf unterschiedliche Weise erfolgen. Möglich ist die Anwendung gängiger Parameterschätzverfahren, wie zum Beispiel LS-Schätzer. LS-Schätzer werden in der Literatur ausführlich beschrieben und sind dem Fachmann bekannt. Eine Schätzung kann beispielsweise so gestaltet sein:

$$D_{T2} = \hat{a}_1 \cdot D_{T1} + \hat{a}_0$$

$D_{T2}$ ist die Position des Tracks $T_2$

$D_{T1}$ ist die Position des Tracks $T_1$

$\hat{a}_0$ und $\hat{a}_1$ sind die geschätzten Parameter einer Geraden, die den linearen Zusammenhang zwischen der Position von Track $T_1$ und Track $T_2$ beschreiben.

Um die Positionspaare nicht kontinuierlich im Speicher halten zu müssen, können die genannten Verfahren auch rekursiv implementiert werden. Die Schätzung kann zunächst fehlerhaft sein, verbessert sich aber mit steigender Anzahl an Wertepaaren. Es ist natürlich nötig, zuerst die Parameter zu ermitteln, bevor eine Vorhersage der aktuellen Position des einen Tracks aus der Position des anderen Track getroffen werden kann.

Die beschriebene Erfindung lässt sich nutzbringend erweitern. Die Echokurve zeigt häufig eine große Anzahl an Echos, was viele Tracks nach sich zieht. Im beschriebenen Verfahren werden im allgemeinen Fall alle Tracks untereinander in Bezug gesetzt. Das bedeutet, dass aus jedem einzelnen Track direkt eine Aussage über den Ort jedes anderen Tracks gemacht werden kann. Die Anzahl A der aufzustellenden funktionalen Zusammenhänge lässt sich in Abhängigkeit zu der Anzahl N an Tracks mit der Formel

$$A = N \cdot (N - 1)/2$$

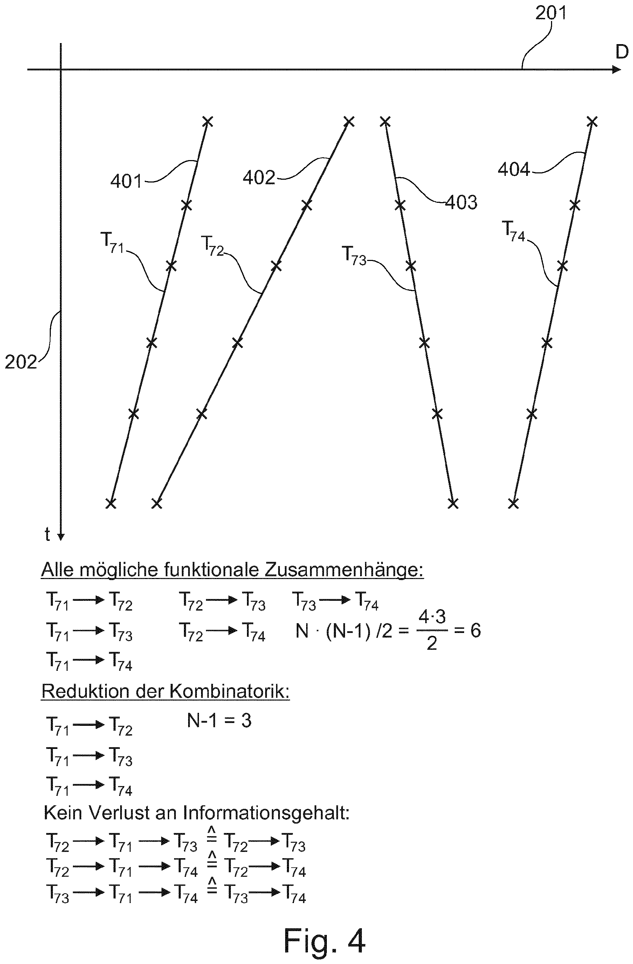

berechnen. Bei vier verfolgten Tracks müssen dann sechs Zusammenhänge erstellt, berechnet, gepflegt und gespeichert werden. Eine Erweiterung der Erfindung ergibt sich durch gezielte Reduktion der Kombinatorik. Fig. 4 zeigt die vollständige Auflistung bei vier verschiedenen Tracks. Die funktionalen Zusammenhänge sind durch einen Pfeil dargestellt. Die Richtung des Pfeils ist nur beispielhaft, da der Zusammenhang auch umkehrbar ist. Ist beispielsweise der Zusammenhang $T_{71} \rightarrow T_{72}$ bekannt, so ist auch der Zusammenhang $T_{72} \rightarrow T_{71}$ durch Bildung der Umkehrfunktion berechenbar. Weiterhin zeigt Fig. 4 eine Möglichkeit der Reduktion der Kombinatorik ohne dabei die Aussagekraft der Erfindung zu vermindern. Beispielhaft wurde die Reduktion anhand des Tracks $T_{71}$ durchgeführt. Die Zusammenhänge zwischen $T_{72}$ und $T_{73}$, $T_{72}$ und $T_{74}$ bzw. $T_{73}$ und $T_{74}$ können aus den Zusammenhänge $T_{71}$ und $T_{72}$, $T_{71}$ und $T_{73}$ bzw. $T_{71}$ und $T_{74}$ berechnet werden. Es ist dann nur noch die Speicherung und Erweiterung von

$$A = N - 1$$

(in Fig. 4 dann drei) funktionalen Zusammenhängen nötig. Die Reduktion setzt voraus, dass ein Track als Ursprung der Reduktion gewählt werden muss. Diesen Track könnte man auch als Zwischentrack bezeichnen. Im Beispiel aus Fig.4 ist dies Track $T_{71}$. Selbstverständlich könnte auch jeder andere Track als Zwischentrack der Reduktion gewählt werden. Dass kein Informationsgehalt verloren geht, zeigt die Berechnungskette aus Figur 4. Beispielsweise lässt sich der Zusammenhang zwischen $T_{72} \rightarrow T_{73}$ aus den beiden Zusammenhängen $T_{71} \rightarrow T_{72}$ und $T_{71} \rightarrow T_{73}$ ermitteln. Dazu muss die Umkehrfunktion $T_{71} \leftarrow T_{72}$ von $T_{71} \rightarrow T_{72}$ gebildet werden. Anschließend lässt sich der erweiterte Zusammenhang $T_{72} \rightarrow T_{71} \rightarrow T_{73}$ aufstellen und der0 Ort von Track $T_{73}$ aus Track $T_{72}$ bestimmen ohne zuvor die Parameter des funktionalen Ausdrucks für den Zusammenhang $T_{72} \rightarrow T_{73}$ geschätzt zu haben. Hier ergeben sich Vorteile in der Performanz, da das Schätzen der Parameter sich als rechenintensiv erweist. Zudem wird Speicherplatz eingespart.

Ein Kernaspekt des beschriebenen Verfahrens liegt im Schätzen der Parameter einer Zielfunktion, die dann den Zusammenhang der Position zwischen zwei Tracks beschreibt. Wurden die Parameter der Zielfunktion während des Betriebs des Füllstandmessgeräts hinreichend gut ermittelt, so kann aus der Position des einen Tracks auf die Position eines anderen Tracks geschlossen werden. Da die Parameter abhängig von der Messstelle sind (Einbauort, Stutzen, Flansch, Behälterboden, Behälterdecke, Füllgut, Einbauten im Behälter), kann eine Parametrierung im Werk nicht erfolgen.

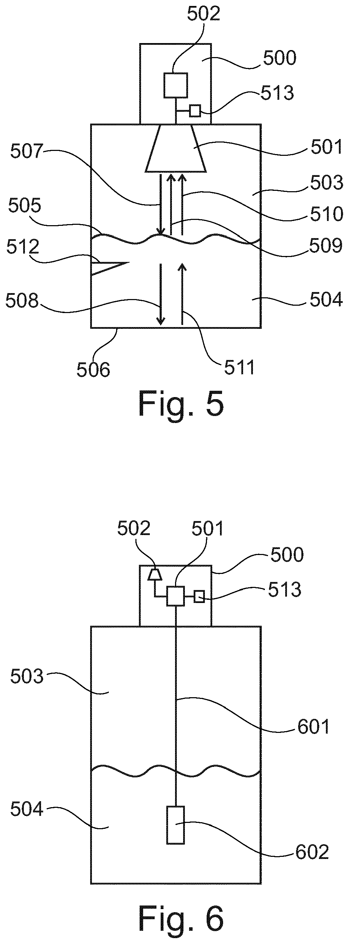

Fig. 5 zeigt ein Laufzeit-Füllstandmessgerät 500, das an oder in einem Behälter installiert ist. Bei dem Füllstandmessgerät 500 handelt es sich beispielsweise um ein Füllstandradar oder ein Ultraschallgerät. Dieses Laufzeit-Füllstandmessgerät 500 sendet freistrahlende Wellen, beispielsweise in Form von Impulsen, 507 in Richtung Füllgutoberfläche 505 aus. Im Falle eines Füllstandradars ist hierfür eine Antenne 501 vorgesehen, beispielsweise in Form einer Hornantenne. Dieses Sendesignal bzw. der Sendepuls 507 wird mit Hilfe einer Signalgeneratoreinheit 513 erzeugt und über die Sende-/Empfangeinheit 501 abgestrahlt. Das abgestrahlte Sendesignal 507 trifft nun auf die Füllgutoberfläche 505 des Füllguts 504, das sich im Behälter befindet. Davor durchläuft es das über der Füllgutoberfläche 505 befindliche Medium, beispielsweise die Behälteratmosphäre.

Ein Anteil des Sendesignals 507 wird nun an der Füllgutoberfläche reflektiert und bewegt sich als Echo 509 zurück zur Sende-/Empfangseinheit 501. Ein anderer Anteil des Sendesignals 507 tritt in das Füllmedium 504 ein und bewegt sich zum Boden 506 des Behälters (siehe Signalanteil 508). Dort wird es dann reflektiert und bewegt sich als sog. Bodenecho 511 zurück in Richtung Sende-/Empfangseinheit 501. Ein Teil dieses Bodenechos wird wieder zurückreflektiert (an der Füllgutoberfläche 505). Ein anderer Teil des Bodenechos 510 durchdringt jedoch die Füllgutoberfläche 505 und kann dann von der Sende-/Empfangseinheit 501 aufgenommen und an die Auswerteeinheit 502 geleitet werden.

Ein Teil des Sendesignals 507 kann auch an anderen Reflektoren reflektiert werden. Beispielhaft hierfür ist ein an der Behälterwand angebrachter Vorsprung 512 gezeigt, der sich unterhalb der Füllgutoberfläche befindet.

Fig. 6 zeigt ein weiteres Beispiel eines an einem Behälter eingebauten Laufzeit-Füllstandmessgeräts 500. Hierbei handelt es sich um ein TDR-Füllstandmessgerät, welches nach dem Prinzip geführter Wellen arbeitet. Es kann sich hierbei um geführte Mikrowellen oder andere wellenartige Sendesignal handeln, die entlang eines Drahtes 601 oder beispielsweise auch im Inneren eines Hohlleiters in Richtung Füllgutoberfläche und teilweise auch in das Füllgut hineingeführt werden. Am Ende des Drahtes 601 befindet sich beispielsweise ein Gewicht 602 zur Straffung des Drahtes.

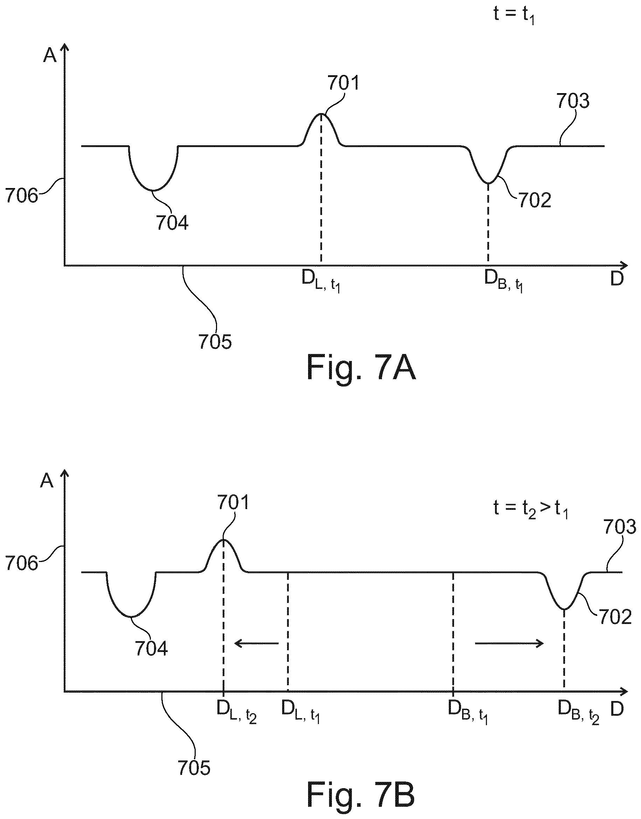

Fig. 7A zeigt nun ein Beispiel für eine in der Auswerteeinheit aufgezeichnete Echokurve 703. Die Echokurve 703 weist zwei Minima 702, 704 und ein Maximum 701 auf.

An dieser Stelle sei erwähnt, dass die horizontale Achse 705 die elektrische Distanz (welche der Laufzeit der einzelnen Abschnitte der Echokurve 703 entspricht) und die Hochachse 706 die Amplitude der einzelnen Abschnitte der Echokurve 703 darstellt.

Bei dem Maximum 701 handelt es sich beispielsweise um das an der Füllgutoberfläche reflektierte Echo und bei dem Minimum 702 handelt es sich beispielsweise um das am Sondenende der Sonde 601, 602 der Fig. 6 reflektierte Echo oder um das am Behälterboden 506 der Fig. 5 reflektierte Echo.

Diese Echokurve ist zu einem Zeitpunkt $t_1$ aufgenommen.

Fig. 7B zeigt eine entsprechende Echokurve, die zu einem späteren Zeitpunkt $t_2$ aufgenommen wurde. Wie man an dieser Kurve erkennt, haben sich sowohl das Füllgutecho 701 als auch das Sondenende- bzw. Bodenecho 702 verschoben, allerdings in entgegengesetzte Richtungen. Dies liegt daran, dass sich das Sondenendeecho bzw. Bodenecho unterhalb der Füllgutoberfläche befindet.

Stellt die Auswerteeinheit nun fest, dass es sich bei dem Echo 701 um Echos handelt, die auf einen identischen Reflektor zurückzuführen sind (in diesem Fall auf die Füllgutoberfläche) und stellt sie fest, dass die Echos 702 ebenfalls auf einem anderen, identischen Reflektor (Behälterboden oder Sondenende) zurückzuführen sind, so kann sie die Echos 701 zu einer ersten Gruppe und die Echos 702 zu einer zweiten Gruppe zusammenfassen. Werden nun mehrere Echokurven zu verschiedenen Zeitpunkten aufgenommen, können die elektrischen Distanzen der einzelnen Echos durch aneinandergesetzte Geradensegmente näherungsweise dargestellt werden. Dies ist in Fig. 8 gezeigt. Die Querachse 810 bezeichnet die Zeitpunkte $t_i$, zu denen die einzelnen Echokurven gemessen wurden und die Hochachse 811 bezeichnet die elektrische Distanz, welche die verschiedenen Echos der einzelnen Echokurven zurückgelegt haben.

Der erste Track $T_1$ besteht aus drei Geradensegmenten 801, 802, 803, welche jeweils unterschiedliche Steigung aufweisen, je nachdem, mit welcher Rate der Behälter befüllt oder geleert wird. Geradensegment 801 beschreibt eine Behälterfüllung zwischen den Zeitpunkten $t_1$ bis $t_2$, Segment 802 ein Entleerung zwischen den Zeitpunkten $t_2$ bis $t_3$ und Segment 803 wieder eine Befüllung zwischen den Zeitpunkten $t_3$ und $t_4$.

Wie die Kreuze um die drei Geradensegmente 801, 802, 803 symbolisieren sollen, haben zahlreiche Messungen (Echokurvenerfassungen) stattgefunden, so dass die drei Geradensegmente 801 bis 803 mit hinreichender Genauigkeit bestimmt werden können.

Die aufgenommenen Echokurven weisen noch zwei weitere Gruppen von Echos auf, deren elektrische Distanzen jeweils durch die Geradensegmente 804, 805, 806 bzw. 807, 808, 809 angenähert werden.

Wie aus der Fig. 8 ersichtlich ist, befinden sich die Knicke der drei Tracks $T_1$ bis $T_3$ jeweils an denselben Zeitpunkten $t_2$, $t_3$ und $t_4$.

Nun können jeweils zwei der Tracks zueinander ins Verhältnis gesetzt werden, um den funktionalen Zusammenhang zwischen den einzelnen Tracks zu bestimmen.

Nimmt man jeweils zwei Paare von Tracks, ergeben sich hieraus zwei angenäherte Geraden 905, 906 (siehe Fig. 9). Hier bezeichnet die Querachse 903 die elektrische Distanz der Echos einer ersten Echogruppe (also eines ersten Tracks Ty) und die Hochachse 904 bezeichnet die elektrische Distanz der Echos einer zweiten Echogruppe (also eines zweiten Tracks Tx). In diesem Zusammenhang wird in der Fachwelt auch oft von "Trackposition" gesprochen. Hierunter ist, wie oben beschrieben, die entsprechende elektrische Distanz, die ein bestimmtes Echos einer bestimmten Echokurve auf seinem Weg zur Empfangseinheit zurückgelegt hat, zu verstehen.

Durch die Bestimmung des funktionalen Zusammenhangs (905, 906) kann das Tracking der Echos verbessert werden.

Insbesondere kann dadurch das Problem gelöst werden, das sich ergibt, wenn sich zwei Gruppen von Echos in einer Echokurve sehr nahe kommen, so dass sich deren Gating-Bereich überlappt. Ein solcher Fall ist beispielsweise in der Fig. 10 zum Zeitpunkt $t = t_3$ dargestellt.

Der Gating-Bereich einer Gruppe von Echos oder eines Tracks mag ein vorgebbarer Toleranzbereich für den Ort eines Echos sein. Oftmals wird in der Praxis ein fester Bereich um die zuletzt erfasste Position oder elektrische Distanz eines Echos oder eines Tracks als Gating Bereich verwendet. Die Verwendung von Gating-Bereichen ist dem Fachmann bekannt, und wird beispielsweise in WO 2009/037000 A2 beschrieben.

In Figur 10 ist zu sehen, wie die Echokurven zu vier verschiedenen Zeiten $t_0$, $t_1$, $t_2$ und $t_3$ aussehen. Im vorliegenden Beispiel entscheidet sich Track $T_1$ aufgrund der räumlichen Nähe zu einer Fortsetzung mit Echo $e_{10}$. Dies stellt physikalisch aber die Fortsetzung des Mehrfachechotracks $T_2$ dar. Solche Fehlzuordnungen lassen sich mit bekannten Verfahren im Regelfall nicht verhindern.

Mehrfachechos entstehen durch mehrfache Reflexion des Sendesignals an der Behälterdecke und dem Füllmedium (Beispiel: Messgerät -> Füllgutoberfläche -> Behälterdecke-> Fülgutoberfläche -> Messgerät). Sie sind dem Fachmann aus verschiedenen Veröffentlichungen bekannt.

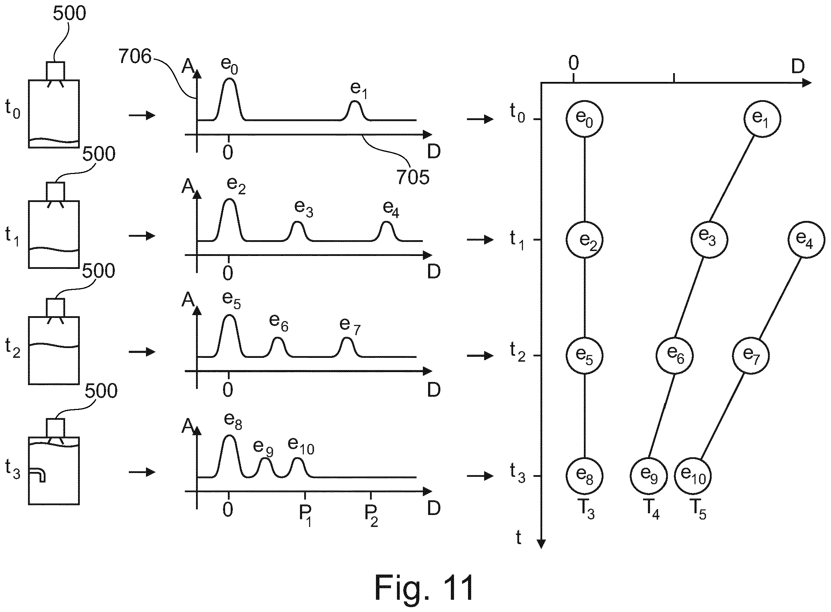

Durch Anwendung des erfindungsgemäßen Verfahrens kann ein Verhalten entsprechend Fig. 11 erreicht werden. Dargestellt ist die gleiche Abfolge von Echokurven. Zu sehen ist das Antennenklingel-Echo (e0, e2, e5, e8), das eigentliche Füllgutecho (e1, e3, e6, e9) sowie das erste Mehrfachecho der Füllgutreflexion (e4, e7, e10).

Erreicht wird das verbesserte Verhalten durch Berücksichtigung des funktionalen Zusammenhangs (lineares Verhältnis) zwischen dem Track $T_4$ sowie dem Track $T_5$.

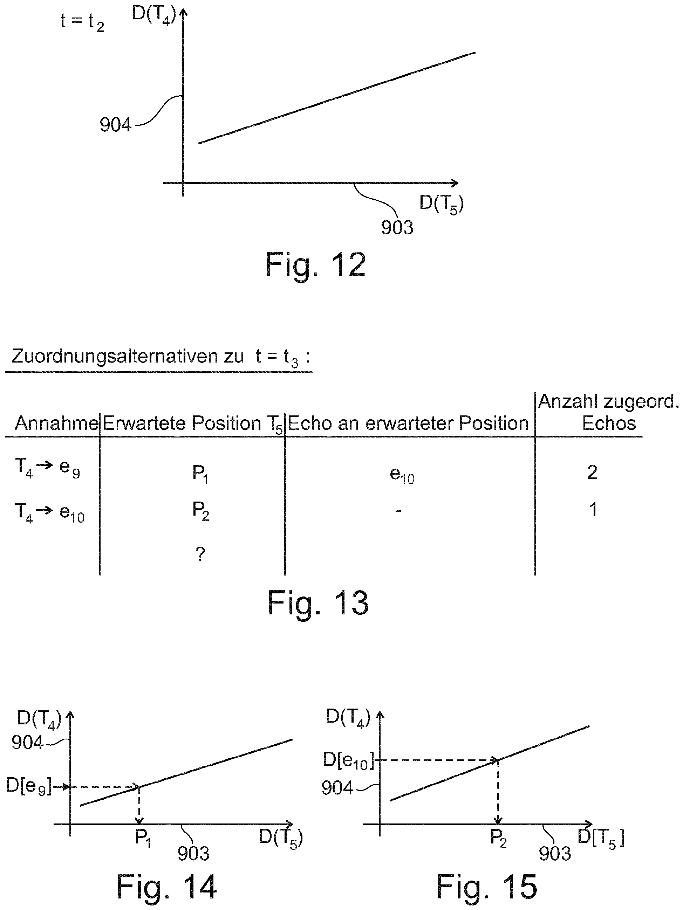

Fig. 12 zeigt das lineare Verhältnis zwischen den Tracks $T_4$ und $T_5$, wie es beispielsweise zu $t = t_2$ vom Füllstandmessgerät ermittelt wird.

Die Auswerteeinheit im Füllstandmessgerät weist eine Trackingeinrichtung auf und bildet, wie dies in der Fig. 13 gezeigt ist, mehrere Alternativzuordnungen zwischen den (beispielsweise seit mehreren Messzyklen) bestehenden Tracks und den aufgefundenen Echos der aktuell erfassten Echokurve.

Als erste Annahme wird $T_4$ hypothetisch mit Echo e9 fortgesetzt. Das Trackingverfahren prüft nun für alle bislang vorhandenen Tracks (Füllgutecho-Track, Mehrfachecho-Track, Bodenecho-Track und/oder Sondenende-Track, etc.), ob ein funktionaler Zusammenhang zum aktuelle fortzuführenden Track existiert. Ist ein solcher funktionaler Zusammenhang vorhanden, wird dann ermittelt, an welcher Position der bislang vorhandene Track dann erscheinen müsste, wie dies in der Fig. 14 dargestellt ist. Wie bereits mehrfach erläutert, handelt es sich bei der "Position eines Tracks" zu einem bestimmten Zeitpunkt um die elektrische Distanz, die das Echo der für diesen Zeitpunkt aufgezeichneten Echokurve zurückgelegt hat (oder anders ausgedrückt: um die Position des Echos zu diesem Zeitpunkt).

Hier muss Track $T_5$ an Position P1 erscheinen (vgl. Fig. 11). An Position P1 (exakter: in der Nähe der Position P1) befindet sich Echo e10, weshalb kausal folgend (aufgrund der Hypothese einer Fortsetzung von Track $T_4$ mit Echo e9) Track $T_5$ zu Echo e10 zugeordnet werden muss. Die Anzahl zuordenbarer Echos ist also im vorliegenden Fall gleich 2.

Als zweite Annahme wird $T_4$ mit Echo e10 hypothetisch fortgesetzt. Die kausal folgende Position des Tracks $T_5$ ergibt sich gemäß Fig. 15 zu P2. An der Position P2 findet sich kein aktuelles Echo (vgl. Fig. 11), weshalb $T_5$ unter dieser Annahme nicht fortgesetzt werden kann. Die Anzahl zuordenbarer Echos ist also um eins geringer (1).

Die am besten geeignete Zuordnung ergibt sich aus der ersten Hypothese, da die Anzahl zuordenbarer Echos dann am größten ist. Dieses Kriterium basiert auf der physikalischen Tatsache, dass Echos bekannter Reflexionsstellen unter normalen Umständen nicht zufällig verschwinden, sondern an entsprechender Position wieder aufgefunden werden können (insofern sie nicht im Rauschen untergehen, etc.).

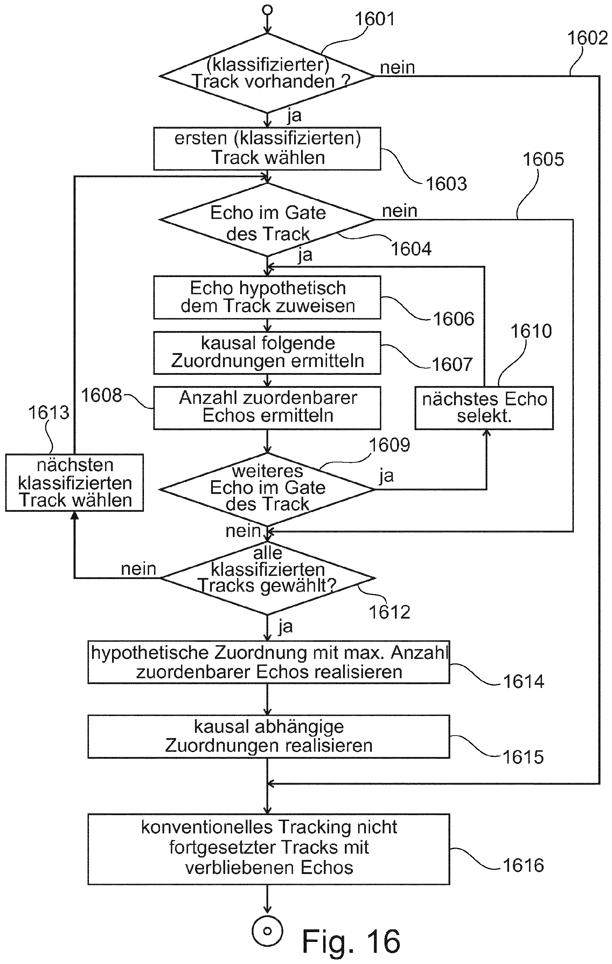

Fig. 16 zeigt ein vollständiges Ablaufdiagramm des Verfahrens. Es ist zu beachten, dass unter klassifizierten Tracks Tracks verstanden werden, welche Echos ausgewählt aus der Gruppe der Echotypen Füllgutecho, Bodenecho, Mehrfachecho oder Störecho, bedecktes Störecho oder Sondenendeecho gruppieren. Weiterhin kann auch ein Vielfachecho eines Bodenechos verwendet werden. Im vorliegenden Kontext der Erfindung mag ein Bodenecho, welches eher aus dem Bereich der freistrahlenden Mikrowelle bekannt ist, synonym gebraucht werden mit den Begriffen "Sondenendecho" oder "Seilendecho", welche aus dem Bereich der geführten Mikrowelle bekannt sind.

In Schritt 1601 wird festgestellt, ob ein Track vorhanden ist. Eine Klassifikation des Tracks ist nicht notwendig, kann in einer anderen Ausführungsform zusätzlich berücksichtigt werden. Ist ein Track nicht vorhanden, springt das Verfahren weiter zum letzten Schritt, bei dem ein konventionelles Tracking der nicht fortgesetzten Tracks (oder sogar aller Tracks) mit den verbliebenen Echos (oder aller Echos) erfolgt.

Ist ein Track vorhanden, wird der erste Track gewählt (Schritt 1603). In Schritt 1604 wird dann entschieden, ob ein Echo im Gate des Tracks liegt, ob es also nahe genug beim zuletzt bekannten Ort des Track ein Echo gibt, das geeignet ist, um diesem Track zugeordnet werden zu können. Ist dies nicht der Fall, springt das Verfahren in Schritt 1605 zu Schritt 1612.

Ist dies schon der Fall, wird das Echo in Schritt 1606 hypothetisch diesem Track zugewiesen (Bildung einer ersten hypothetischen Zuordnung) und in Schritt 1607 wird zumindest eine kausal folgende Zuordnung eines weiteren Echos zu einem der weiteren Tracks ermittelt (vgl. Fig. 14, 15). In Schritt 1608 wird die Anzahl zuordenbarer Echos ermittelt, welche sich aus der ersten hypothetischen Zuordnung ergeben würde, und in Schritt 1609 wird bestimmt, ob ein weiteres Echo im Gate des Tracks liegt. Ist dies der Fall, so kann eine weitere hypothetische Zuordnung eines Echos zum ersten Track untersucht werden, und das Verfahren springt zu Schritt 1610. In diesem Verfahrensschritt wird das nächste Echo im Gate des Tracks selektiert, woraufhin es im Schritt 1606 Ausganspunkt einer weiteren hypothetischen Zuordnung eines Echos zum Track bildet. Ist kein weiteres Echo im Gate des ersten Track, springt das Verfahren zu Schritt 1612, in welchem festgestellt wird, ob alle Tracks ausgewählt wurden. Ist dies nicht der Fall, springt das Verfahren zu Schritt 1613, in welchem der nächste (klassifizierte oder nicht klassifizierte) Track ausgewählt wird, woraufhin es mit Schritt 1604 weitergeht.

Ist dies schon der Fall (wurden also alle Tracks behandelt), erfolgt in Schritt 1614 die Realisierung der bislang nur hypothetischen Zuordnung eines Echos zu dem entsprechenden Track, wobei diejenige hypothetische Zuordnung realisiert wird, die der maximalen Anzahl zuordenbarer Echos entspricht. In Schritt 1615 werden die daraus folgenden kausal abhängigen Zuordnungen realisiert und im letzten Schritt 1616 kann dann ein konventionelles Tracking nicht fortgesetzter Tracks mit verbliebenen Echos durchgeführt werden.

**Patentansprüche**

1. Laufzeit-Füllstandmessgerät, aufweisend:

   eine Sendeeinheit zum Aussenden eines Sendesignals, welches an einer Füllgutoberfläche eines Füllmediums und zumindest einem zweiten Reflektor reflektiert wird;
   eine Empfangseinheit zum Erfassen des reflektierten Sendesignals, bei dem es sich um eine Echokuve handelt, die mehrere Echos aufweist;
   eine Auswerteeinheit zum Durchführen eines Tracking-Verfahrens zur Gruppierung von jeweils auf identische Reflektoren zurückzuführenden Echos von zu verschiedenen Zeiten erfassten Echokurven, wobei die Auswerteeinheit ausgeführt ist, die folgenden Schritte durchzuführen:

(a) Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt; **gekennzeichnet durch** die folgenden Schritte:

(b) Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist; wobei $D_{T1,k}$ die Position des Tracks $T_1$ der Messung zum Zeitpunkt $k$ ist;

(c) Zuordnen eines ersten Echos einer weiteren Echokurve dem ersten Track, wobei die weitere Echokurve zu einem späteren Zeitpunkt als die zeitlich aufeinanderfolgenden Echokurven aufgenommen wurde;

(d) Bestimmen einer erwarteten Position eines zweiten Echos der weiteren Echokurve durch Berechnung der erwarteten Position unter Berücksichtigung der Position des ersten Echos des ersten Tracks und des linearen Verhältnisses;

(e) Feststellen, ob die so bestimmte erwartete Position des zweiten Echos auch einer tatsächlichen Position eines Echos der weiteren Echokurve entspricht, und Zuordnen des zweiten Echos dem zweiten Track, falls dies der Fall ist.

**2.** Füllstandmessgerät nach Anspruch 1, wobei die Auswerteeinheit weiterhin ausgeführt ist zum: Durchführen der Schritte (b) bis (e) für den ersten Track, das erste Echo und einen dritten Track.

**3.** Füllstandmessgerät nach einem der vorhergehenden Ansprüche, wobei die Auswerteeinheit weiterhin ausgeführt ist zum: Durchführen der Schritte (b) bis (e) für einen dritten Track, ein drittes Echo der weiteren Echokurve, das dem dritten Track zugeordnet wird, und den zweiten Track.

**4.** Füllstandmessgerät nach einem der vorhergehenden Ansprüche, wobei, falls in Schritt (e) festgestellt wird, dass die bestimmte erwartete Position des Echos auch einer tatsächlichen Position eines Echos der weiteren Echokurve entspricht, die bestimmte erwartete Position als Treffer gewertet wird.

**5.** Füllstandmessgerät nach Anspruch 4, wobei die Auswerteeinheit weiterhin ausgeführt ist zum:

Vergleichen
der Anzahl an Treffern nach mehrfacher Durchführung der Schritte (b) bis (e), wobei das erste Echo stets dem ersten Track zugeordnet wird, bis alle weiteren Tracks der Echokurve berücksichtigt wurden, mit
der Anzahl an Treffern nach mehrfacher Durchführung der Schritte (b) bis (e), wobei das erste Echo stets einem anderen Track als dem ersten Track zugeordnet wird, bis alle weiteren Tracks der Echokurve berücksichtigt wurden.

**6.** Füllstandmessgerät nach einem der Ansprüche 4 oder 5, wobei die Auswerteeinheit weiterhin ausgeführt ist zum:
Vergleichen der Anzahlen an Treffern zur Bewertung der Wahrscheinlichkeit einer korrekten Zuordnung der Echos zu den entsprechenden Tracks.

**7.** Verfahren zum Durchführen eines Tracking-Verfahrens zur Gruppierung von auf identische Reflexionsstellen zurückzuführenden Echos zeitlich aufeinanderfolgender Echokurven und zum Zuordnen eines Echos zu einem Track, wobei das Verfahren die folgenden Schritte aufweist:

(a) Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt; **gekennzeichnet durch** die folgenden Schritte:

(b) Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist;

wobei $D_{T1,k}$ die Position des Tracks $T_1$ der Messung zum Zeitpunkt $k$ ist;

(c) Zuordnen eines ersten Echos einer weiteren Echokurve dem ersten Track, wobei die weitere Echokurve zu einem späteren Zeitpunkt als die zeitlich aufeinanderfolgenden Echokurven aufgenommen wurde;

(d) Bestimmen einer erwarteten Position eines zweiten Echos der weiteren Echokurve durch Berechnung der erwarteten Position unter Berücksichtigung der Position des ersten Echos des ersten Tracks und des linearen Verhältnisses;

(e) Feststellen, ob die so bestimmte erwartete Position des zweiten Echos auch einer tatsächlichen Position eines Echos der weiteren Echokurve entspricht, und Zuordnen des zweiten Echos dem zweiten Track, falls dies der Fall ist.

**8.** Prozessor zum Durchführen eines Tracking-Verfahrens zur Gruppierung von auf identische Reflexionsstellen zurückzuführenden Echos zeitlich aufeinanderfolgender Echokurven und zum Zuordnen eines Echos zu einem Track, wobei der Prozessor ausgebildet ist, das Verfahren mit folgenden Schritten auszuführen:

(a) Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt; **gekennzeichnet durch** die folgenden Schritte:

(b) Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist;

wobei $D_{T1,k}$ die Position des Tracks $T_1$ der Messung zum Zeitpunkt $k$ ist;

(c) Zuordnen eines ersten Echos einer weiteren Echokurve dem ersten Track, wobei die weitere Echokurve zu einem späteren Zeitpunkt als die zeitlich aufeinanderfolgenden Echokurven aufgenommen wurde;

(d) Bestimmen einer erwarteten Position eines zweiten Echos der weiteren Echokurve durch Berechnung der erwarteten Position unter Berücksichtigung der Position des ersten Echos des ersten Tracks und des linearen Verhältnisses;

(e) Feststellen, ob die so bestimmte erwartete Position des zweiten Echos auch einer tatsächlichen Position eines Echos der weiteren Echokurve entspricht, und Zuordnen des zweiten Echos dem zweiten Track, falls dies der Fall ist.

**9.** Computerlesbares Medium, auf dem ein Programm gespeichert ist, das, wenn es auf einem Prozessor eines Laufzeit-Füllstandmessgerätes ausgeführt wird, den Prozessor anleitet, die folgenden Schritte durchzuführen:

(a) Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt; **gekennzeichnet durch** die folgenden Schritte:

(b) Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist;

wobei $D_{T1,k}$ die Position des Tracks $T_1$ der Messung zum Zeitpunkt $k$ ist;

(c) Zuordnen eines ersten Echos einer weiteren Echokurve dem ersten Track, wobei die weitere Echokurve zu einem späteren Zeitpunkt als die zeitlich aufeinanderfolgenden Echokurven aufgenommen wurde;

(d) Bestimmen einer erwarteten Position eines zweiten Echos der weiteren Echokurve durch Berechnung der erwarteten Position unter Berücksichtigung der Position des ersten Echos des ersten Tracks und des linearen Verhältnisses;

(e) Feststellen, ob die so bestimmte erwartete Position des zweiten Echos auch einer tatsächlichen Position eines Echos der weiteren Echokurve entspricht, und Zuordnen des zweiten Echos dem zweiten Track, falls dies der Fall ist.

10. Programmelement, das, wenn es auf einem Prozessor eines Laufzeit-Füllstandmessgerätes ausgeführt wird, den Prozessor anleitet, die folgenden Schritte durchzuführen:

(a) Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt; **gekennzeichnet durch** die folgenden Schritte:

(b) Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist; wobei $D_{T1,k}$ die Position des Tracks $T_1$ der Messung zum Zeitpunkt $k$ ist;

(c) Zuordnen eines ersten Echos einer weiteren Echokurve dem ersten Track, wobei die weitere Echokurve zu einem späteren Zeitpunkt als die zeitlich aufeinanderfolgenden Echokurven aufgenommen wurde;

(d) Bestimmen einer erwarteten Position eines zweiten Echos der weiteren Echokurve durch Berechnung der erwarteten Position unter Berücksichtigung der Position des ersten Echos des ersten Tracks und des linearen Verhältnisses;

(e) Feststellen, ob die so bestimmte erwartete Position des zweiten Echos auch einer tatsächlichen Position eines Echos der weiteren Echokurve entspricht, und Zuordnen des zweiten Echos dem zweiten Track, falls dies der Fall ist.

**Claims**

1. Delay-based fill level measurement device, comprising:

a transmission unit for emitting a transmission signal, which is reflected on a filling material surface of a filling medium and at least on a second reflector;

a reception unit for capturing the reflected transmission signal, which is an echo curve comprising a plurality of echoes;

an evaluation unit for carrying out a tracking method for grouping echoes originating from identical reflectors from echo curves captured at different times, the evaluation unit being configured to carry out the following steps:

(a) determining a first track of a first group of echoes which originate from a first reflector, and a second track of a second group of echoes which originate from a second reflector, each track describing the delay of the corresponding transmission signal from the transmission unit to the reflector assigned to the track and back to the reception unit at the various times;

**characterized by** the following steps:

(b) determining a linear relationship between the first track and the second track, which can mathematically be described by the following equation:

$$D_{T2,k} = a_1 \cdot D_{T1,k} + a_0 + e_k;$$

wherein $D_{T2,k}$ is the position of track $T_2$ of the measurement at time k; wherein $D_{T1,k}$ is the position of track $T_1$ of the measurement at time k;

(c) assigning a first echo of a further echo curve to the first track, the further echo curve having been received at a later moment than the echo curves in a sequence over time;

(d) determining an expected position of a second echo of the further echo curve by calculating the expected position by taking account of the position of the first echo of the first track and the linear relationship;

(e) establishing whether the expected position of the second echo corresponds to an actual position of an echo of the further echo curve and, if so, assigning the second echo to the second track.

2. Fill level measurement device according to claim 1, the evaluation unit further being configured to: carry out steps (b) to (e) for the first track, the first echo and a third track.

**3.** Fill level measurement device according to either of the preceding claims, the evaluation unit further being configured to:
carry out steps (b) to (e) for a third track, a third echo of the further echo curve, which is assigned to the third track, and the second track.

**4.** Fill level measurement device according to any of the preceding claims, wherein the determined expected position is evaluated as a match if it is established in step (e) that the determined expected position of the echo actually corresponds to an actual position of an echo of the further echo curve.

**5.** Fill level measurement device according to claim 4, wherein the evaluation unit is further configured to compare:

the number of matches after repeatedly carrying out steps (b) to (e), the first echo always being assigned to the first track until all further tracks of the echo curve have been taken into account, with
the number of matches after repeatedly carrying out steps (b) to (e), the first echo always being assigned to a track other than the first track until all further tracks of the echo curve have been taken into account.

**6.** Fill level measurement device according to either claim 4 or claim 5, wherein the evaluation unit is further configured to:
compare the numbers of matches so as to evaluate the probability of correct assignment of the echoes to the corresponding tracks.

**7.** Method for carrying out a tracking method for grouping echoes, which originate from identical reflection points, of echo curves in a sequence over time, and for assigning an echo to a track, the method comprising the following steps:

(a) determining a first track of a first group of echoes which originate from a first reflector and a second track of a second group of echoes which originate from a second reflector, each track describing the delay of the corresponding transmission signal from the transmission unit to the reflector assigned to the track and back to the reception unit at the various times;

**characterized by** the following steps:

(b) determining a linear relationship between the first track and the second track;
which can mathematically be described by the following equation:

$$D_{T2,k} = a_1 \cdot D_{T1,k} + a_0 + e_k;$$

wherein $D_{T2,k}$ is the position of track $T_2$ of the measurement at time k;
wherein $D_{T1,k}$ is the position of track $T_1$ of the measurement at time k;

(c) assigning a first echo of a further echo curve to the first track, the further echo curve having been received at a later moment than the echo curves in a sequence over time;
(d) determining an expected position of a second echo of the further echo curve by calculating the expected position by taking account of the position of the first echo of the first track and the linear relationship;
(e) establishing whether the expected position of the second echo determined in this manner actually corresponds to an actual position of an echo of the further echo curve and, if so, assigning the second echo to the second track.

**8.** Processor for carrying out a tracking method for grouping echoes, which originate from identical reflection points, of echo curves in a sequence over time, and for assigning an echo to a track, wherein the processor is configured for carrying out the method comprising the following steps:

(a) determining a first track of a first group of echoes which originate from a first reflector and a second track of a second group of echoes which originate from a second reflector, each track describing the delay of the corresponding transmission signal from the transmission unit to the reflector assigned to the track and back to the reception unit at the various times;
(b) determining a linear relationship between the first track and the second track;
which can mathematically be described by the following equation:

$$D_{T2,k} = a_1 \cdot D_{T1,k} + a_0 + e_k;$$

wherein $D_{T2,k}$ is the position of track $T_2$ of the measurement at time k;
wherein $D_{T1,k}$ is the position of track $T_1$ of the measurement at time k;

(c) assigning a first echo of a further echo curve to the first track, the further echo curve having been received at a later moment than the echo curves in a sequence over time;
(d) determining an expected position of a second echo of the further echo curve by calculating the expected position by taking account of the position of the first echo of the first track and the linear relationship;

(e) establishing whether the expected position of the second echo determined in this manner actually corresponds to an actual position of an echo of the further echo curve and, if so, assigning the second echo to the second track.

9. Computer-readable medium, on which a program is stored, which when implemented on a processor of a delay-based fill level measurement device instructs the processor to carry out the following method steps:

(a) determining a first track of a first group of echoes which originate from a first reflector and a second track of a second group of echoes which originate from a second reflector, each track describing the delay of the corresponding transmission signal from the transmission unit to the reflector assigned to the track and back to the reception unit at the various times;
(b) determining a linear relationship between the first track and the second track;
which can mathematically be described by the following equation:

$$D_{T2,k} = a_1 \cdot D_{T1,k} + a_0 + e_k;$$

wherein $D_{T2,k}$ is the position of track $T_2$ of the measurement at time k;
wherein $D_{T1,k}$ is the position of track $T_1$ of the measurement at time k;

(c) assigning a first echo of a further echo curve to the first track, the further echo curve having been received at a later moment than the echo curves in a sequence over time;
(d) determining an expected position of a second echo of the further echo curve by calculating the expected position by taking account of the position of the first echo of the first track and the linear relationship;
(e) establishing whether the expected position of the second echo determined in this manner actually corresponds to an actual position of an echo of the further echo curve and, if so, assigning the second echo to the second track.

10. Program element, which when implemented on a processor of a delay-based fill level measurement device instructs the processor to carry out the following steps:

(a) determining a first track of a first group of echoes which originate from a first reflector and a second track of a second group of echoes which originate from a second reflector, each track describing the delay of the corresponding transmission signal from the transmission unit to the reflector assigned to the track and back to the reception unit at the various times;
(b) determining a linear relationship between the first track and the second track;
which can mathematically be described by the following equation:

$$D_{T2,k} = a_1 \cdot D_{T1,k} + a_0 + e_k;$$

wherein $D_{T2,k}$ is the position of track $T_2$ of the measurement at time k;
wherein $D_{T1,k}$ is the position of track $T_1$ of the measurement at time k;

(c) assigning a first echo of a further echo curve to the first track, the further echo curve having been received at a later moment than the echo curves in a sequence over time;
(d) determining an expected position of a second echo of the further echo curve by calculating the expected position by taking account of the position of the first echo of the first track and the linear relationship;
(e) establishing whether the expected position of the second echo determined in this manner actually corresponds to an actual position of an echo of the further echo curve and, if so, assigning the second echo to the second track.

**Revendications**

1. Appareil de mesure de niveau de remplissage basée sur un temps de propagation, comportant :

une unité d'émission destinée à envoyer un signal d'émission qui est réfléchi sur une surface de matériau de remplissage d'un milieu de remplissage et sur au moins un second réflecteur, une unité de réception destinée à acquérir le signal d'émission réfléchi, lequel signal d'émission étant une courbe d'écho comportant plusieurs échos, une unité d'analyse destinée à mettre en oeuvre un procédé de suivi pour regrouper des échos respectivement renvoyés vers des réflecteurs identiques et provenant de différentes courbes d'échos acquises à différents instants, l'unité d'analyse étant configurée pour mettre en oeuvre les étapes suivantes consistant à :

(a) déterminer une première trace d'un premier groupe d'échos qui doivent être renvoyés vers un premier réflecteur, et une deuxième trace d'un second groupe d'échos qui doivent être réfléchis sur un second réflecteur, dans lequel chaque trace décrit, à différents instants, le temps de propagation du signal d'émission correspondant depuis l'unité d'émission jusqu'au réflecteur associé à la trace et en arrière jusqu'à l'unité de réception, **caractérisé par** les étapes suivantes consistant à :

(b) déterminer une relation linéaire entre la première trace et la deuxième trace, qui peut être décrite mathématiquement comme suit :

$$D_{T2,k} = a_1 \cdot D_{T1,k} + a_0 + e_k$$

dans laquelle $D_{T2,k}$ est la position de la trace $T_2$ de la mesure à l'instant k, $D_{T1,k}$ est la position de la trace $T_1$ de la mesure à l'instant k,

(c) associer un premier écho d'une courbe d'écho supplémentaire à la première trace, la courbe d'écho supplémentaire ayant été enregistrée à un instant postérieur aux courbes d'échos successives dans le temps,

(d) déterminer une position attendue d'un second écho de la courbe d'écho supplémentaire en calculant la position attendue en tenant compte de la position du premier écho de la première trace et de la relation linéaire,

(e) déterminer si la position attendue ainsi déterminée du second écho correspond également à une position réelle d'un écho de la courbe d'écho supplémentaire, et associer le second écho à la deuxième trace, si tel est le cas.

2. Appareil de mesure de niveau de remplissage selon la revendication 1, dans lequel l'unité d'analyse est en outre configurée pour :
exécuter les étapes (b) à (e) pour la première trace, le premier écho et une troisième trace.

3. Appareil de mesure de niveau de remplissage selon l'une des revendications précédentes, dans lequel l'unité d'analyse est en outre configurée pour :
exécuter les étapes (b) à (e) pour une troisième trace, un troisième écho de la courbe d'écho supplémentaire qui est associée à la troisième trace, et la deuxième trace.

4. Appareil de mesure de niveau de remplissage selon l'une des revendications précédentes, dans lequel, s'il a été déterminé à l'étape (e) que la position attendue déterminée de l'écho correspond également à une position réelle d'un écho de la courbe d'écho supplémentaire, la position attendue déterminée est évaluée comme concordante.

5. Appareil de mesure de niveau de remplissage selon la revendication 4, dans lequel l'unité d'analyse est en outre configurée pour :

comparer
le nombre de concordances après de multiples exécutions des étapes (b) à (e), dans lequel le premier écho est toujours associé à la première trace jusqu'à ce que toutes les autres traces de la courbe d'écho aient été prises en compte, avec
le nombre de concordances après de multiples exécutions des étapes (b) à (e), dans lequel le premier écho est toujours associé à une autre trace que la première trace jusqu'à ce que toutes les autres traces de la courbe d'écho aient été prises en compte.

6. Appareil de mesure de niveau de remplissage selon l'une des revendications 4 ou 5, dans lequel l'unité d'analyse est en outre configurée pour :
comparer les nombres de concordances afin d'évaluer la probabilité d'une association correcte de l'écho à la trace correspondante.

7. Procédé pour mettre en oeuvre un processus de suivi pour regrouper des échos devant être renvoyés vers des emplacements de réflexion identiques et provenant de courbes d'échos successives dans le temps, et pour associer un écho à une trace, dans lequel le procédé comporte les étapes suivantes consistant à :

(a) déterminer une première trace d'un premier groupe d'échos qui doivent être renvoyés vers un premier réflecteur, et une deuxième trace d'un second groupe d'échos qui doivent être renvoyés vers un second réflecteur, dans lequel chaque trace décrit, à différents instants, le temps de propagation du signal d'émission correspondant depuis l'unité d'émission jusqu'au réflecteur associé à la trace et en arrière jusqu'à l'unité d'émission, **caractérisé par** les étapes suivantes consistant à :

(b) déterminer une relation linéaire entre la première trace et la deuxième trace, qui peut être décrite mathématiquement comme suit :

$$D_{T2,k} = a_1 \cdot D_{T1,k} + a_0 + e_k$$

dans laquelle $D_{T2,k}$ est la position de la trace $T_2$ de la mesure à l'instant k,
$D_{T1,k}$ est la position de la trace $T_1$ de la mesure à l'instant k,

(c) associer un premier écho d'une courbe d'écho supplémentaire à la première trace, la courbe d'écho supplémentaire ayant été enregistrée à un instant postérieur aux courbes d'échos successives dans le temps,
(d) déterminer une position attendue d'un second écho de la courbe d'écho supplémentaire en calculant la position attendue en tenant compte de la position du premier écho de la première trace et de la relation linéaire,
(e) déterminer si la position attendue ainsi déterminée du second écho correspond également à une position réelle d'un écho de la courbe d'écho supplémentaire, et associer le second écho à la deuxième trace, si tel est le cas.

8. Processeur pour mettre en oeuvre un procédé de suivi pour regrouper des échos devant être renvoyés vers des emplacements de réflexion identiques et provenant de courbes d'échos successives dans le temps, et pour associer un écho à une trace, dans lequel le processeur est configuré pour mettre en oeuvre le procédé comportant les étapes suivantes consistant à

(a) déterminer une première trace d'un premier groupe d'échos qui doivent être renvoyés vers un premier réflecteur, et une deuxième trace d'un second groupe d'échos qui doivent être renvoyés vers un second réflecteur, dans lequel chaque trace décrit, à différents instants, le temps de propagation du signal d'émission correspondant depuis l'unité d'émission jusqu'au réflecteur associé à la trace et en arrière jusqu'à l'unité d'émission, **caractérisé par** les étapes suivantes consistant à :
(b) déterminer une relation linéaire entre la première trace et la deuxième trace, qui peut être décrite mathématiquement comme suit :

$$D_{T2,k} = a_1 \cdot D_{T1,k} + a_0 + e_k$$

dans laquelle $D_{T2,k}$ est la position de la trace $T_2$ de la mesure à l'instant k,
$D_{T1,k}$ est la position de la trace $T_1$ de la mesure à l'instant k,

(c) associer un premier écho d'une courbe d'écho supplémentaire à la première trace, la courbe d'écho supplémentaire ayant été enregistrée à un instant postérieur aux courbes d'échos successives dans le temps,
(d) déterminer une position attendue d'un second écho de la courbe d'écho supplémentaire en calculant la position attendue en tenant compte de la position du premier écho de la première trace et de la relation linéaire,
(e) déterminer si la position attendue ainsi déterminée du second écho correspond également à une position réelle d'un écho de la courbe d'écho supplémentaire, et associer le second écho à la deuxième trace, si tel est le cas.

9. Support lisible par ordinateur sur lequel est stocké un programme qui, lorsqu'il est exécuté sur un processeur d'un appareil de mesure de niveau de remplissage basée sur un temps de propagation, amène le processeur à exécuter les étapes suivantes consistant à :

(a) déterminer une première trace d'un premier groupe d'échos qui doivent être renvoyés vers un premier réflecteur, et une deuxième trace d'un second groupe d'échos qui sont renvoyés vers un second réflecteur, dans lequel chaque trace décrit, à différents instants, le temps de propagation du signal d'émission correspondant depuis l'unité d'émission jusqu'au réflecteur associé à la trace et en arrière jusqu'à l'unité d'émission, **caractérisé par** les étapes suivantes consistant à :
(b) déterminer une relation linéaire entre la première trace et la deuxième trace, qui peut être décrite mathématiquement comme suit :

$$D_{T2,k} = a_1 \cdot D_{T1,k} + a_0 + e_k$$

dans laquelle $D_{T2,k}$ est la position de la trace $T_2$ de la mesure à l'instant k,
$D_{T1,k}$ est la position de la trace $T_1$ de la mesure à l'instant k,

(c) associer un premier écho d'une courbe d'écho supplémentaire à la première trace, la courbe d'écho supplémentaire ayant été enregistrée à un instant postérieur aux courbes d'échos successives dans le temps,
(d) déterminer une position attendue d'un second écho de la courbe d'écho supplémentaire en calculant la position attendue en tenant compte de la position du premier écho de la première trace et de la relation linéaire,
(e) déterminer si la position attendue ainsi déterminée du second écho correspond également à une position réelle d'un écho de la courbe d'écho supplémentaire, et associer le second écho à la deuxième trace, si tel est le cas.

**10.** Elément de programme qui, lorsqu'il est exécuté sur un processeur d'un appareil de mesure de niveau de remplissage basée sur un temps de propagation, amène le processeur à exécuter les étapes suivantes consistant à :

(a) déterminer une première trace d'un premier groupe d'échos qui doivent être renvoyés vers un premier réflecteur, et une deuxième trace d'un second groupe d'échos qui doivent être renvoyés vers un second réflecteur, dans lequel chaque trace décrit, à différents instants, le temps de propagation du signal d'émission correspondant depuis l'unité d'émission jusqu'au réflecteur associé à la trace et en arrière jusqu'à l'unité d'émission, **caractérisé par** les étapes suivantes consistant à :

(b) déterminer une relation linéaire entre la première trace et la deuxième trace, qui peut être décrite mathématiquement comme suit :

$$D_{T2,k} = a_1 \cdot D_{T1,k} + a_0 + e_k$$

dans laquelle $D_{T2,k}$ est la position de la trace $T_2$ de la mesure à l'instant k,
$D_{T1,k}$ est la position de la trace $T_1$ de la mesure à l'instant k,

(c) associer un premier écho d'une courbe d'écho supplémentaire à la première trace, la courbe d'écho supplémentaire ayant été enregistrée à un instant postérieur aux courbes d'échos successives dans le temps,

(d) déterminer une position attendue d'un second écho de la courbe d'écho supplémentaire en calculant la position attendue en tenant compte de la position du premier écho de la première trace et de la relation linéaire,

(e) déterminer si la position attendue ainsi déterminée du second écho correspond également à une position réelle d'un écho de la courbe d'écho supplémentaire, et associer le second écho à la deuxième trace, si tel est le cas.

Fig. 1

Fig. 2

Fig. 3

Alle mögliche funktionale Zusammenhänge:

$T_{71} \longrightarrow T_{72}$   $\quad T_{72} \longrightarrow T_{73}$   $\quad T_{73} \longrightarrow T_{74}$

$T_{71} \longrightarrow T_{73}$   $\quad T_{72} \longrightarrow T_{74}$   $\quad N \cdot (N-1)/2 = \dfrac{4 \cdot 3}{2} = 6$

$T_{71} \longrightarrow T_{74}$

Reduktion der Kombinatorik:

$T_{71} \longrightarrow T_{72}$   $\qquad N-1 = 3$

$T_{71} \longrightarrow T_{73}$

$T_{71} \longrightarrow T_{74}$

Kein Verlust an Informationsgehalt:

$T_{72} \longrightarrow T_{71} \longrightarrow T_{73} \; \hat{=} \; T_{72} \longrightarrow T_{73}$

$T_{72} \longrightarrow T_{71} \longrightarrow T_{74} \; \hat{=} \; T_{72} \longrightarrow T_{74}$

$T_{73} \longrightarrow T_{71} \longrightarrow T_{74} \; \hat{=} \; T_{73} \longrightarrow T_{74}$

# Fig. 4

Fig. 5

Fig. 6

$t = t_1$

Fig. 7A

$t = t_2 > t_1$

Fig. 7B

Fig. 8

Fig. 9

Fig. 10

Fig. 11

Fig. 12

Zuordnungsalternativen zu $t = t_3$ :

| Annahme | Erwartete Position $T_5$ | Echo an erwarteter Position | Anzahl zugeord. Echos |
|---|---|---|---|
| $T_4 \rightarrow e_9$ | $P_1$ | $e_{10}$ | 2 |
| $T_4 \rightarrow e_{10}$ | $P_2$ | - | 1 |
| | ? | | |

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060137446 A1
- EP 2309235 A1
- EP 2148219 A1
- US 20110231118 A1
- WO 2009037000 A2